# EUROPEAN PATENT SPECIFICATION

(11) **EP 4 263 950 B1**
(45) Date of publication and mention of the grant of the patent: **26.03.2025**
(21) Application number: 21839493.0
(22) Date of filing: 15.12.2021
(51) Int. Cl.: E02D 3/12

(54) **SOIL STABILIZATION SYSTEM AND METHOD FOR SOIL STABILIZATION**
BODENSTABILISIERUNGSSYSTEM UND VERFAHREN ZUR BODENSTABILISIERUNG
SYSTÈME DE STABILISATION DU SOL ET PROCÉDÉ DE STABILISATION DU SOL

(30) Priority: 15.12.2020 DK PA202070837
(43) Date of publication of application: 25.10.2023
(73) Proprietor: Dansk Anlægsteknik ApS, 5882 Vejstrup (DK)
(72) Inventor: JOHANSEN, Carsten, 5400 Bogense (DK); MØLLEGAARD PEDERSEN, Lars, 5882 Vejstrup (DK)
(74) Representative: Guardian IP Consulting I/S
(86) International application number: PCT/EP2021/086022
(87) International publication number: WO 2022/129244

(56) References cited:
- EP-A2- 1 094 160
- EP-A2- 1 387 009
- WO-A2-2009/034469
- JP-A- 2000 104 243

## Description

The present disclosure relates to methods and systems for soil stabilization.

### Background of the Invention

Soil stabilization is the process for improving the engineering properties of the soil and increasing the stability of the soil. The engineering properties of soils such as mechanical strength, permeability, compressibility, durability and plasticity have a great importance especially when the soil undergoes high loads, for example in construction of buildings and roads.

An important aspect in construction is to provide structured layers, which are capable of carrying certain loads. In case of an unstable base or a layer, the foundation deforms, as a result, the upper layers of the construction erode.

Among different soil stabilization techniques, one of the most commonly implemented technique, especially in construction, is chemical stabilization by means of calcium oxide, commonly known as quicklime or burnt lime. Soils with high clay content have a tendency to swell when moisture content increases. When additives, such as calcium oxide, are exposed to the mineral present in the soil or water, they react and form composite materials. As a result, the soil's expansive properties are reduced. This indicates that lime stabilization reduces the plasticity, i.e., the swell potential. Furthermore, friability of the soil and the bearing capacity are increased by the lime stabilization technique.

Despite the advantages of chemical soil stabilization, in practise it may be expensive as prior art chemical stabilization techniques are very time-dependent and can continue over a long period. These techniques comprise several process steps such as spreading the additive, mixing, compacting and so on. This implies high costs, high consumption of energy, high labour and machinery demand.

Another disadvantage of conventional chemical soil stabilization practises is that the additives are spread and mixed directly on the surface of the soil, complicating the control of the process. Specifically for construction of buildings, deep construction pits are needed. A large amount of soil is excavated and the excavation is either removed or stored temporarily for a later backfilling, which entails difficulties in handling.

Furthermore, stabilization of the soil in a deep construction pit requires a variety of tools, machines and apparatus increasing the overall cost. Thus, there is a great demand in a compact and efficient soil stabilization system, which offers a controlled way of stabilizing soil using additives.

EP 1 387 009 A2 discloses soil modifying apparatus capable of making accurate production management and controlling a mixture ratio with excellent precision is provided. For this purpose, the apparatus includes target processing amount setting means for a raw soil material, actual raw soil material amount detecting means actual raw soil material amount calculating means, raw soil material feeder speed detecting means, predicted raw soil material amount calculating means for calculating a predicted supply amount per hour of the raw soil material, first comparing means for comparing the actual processing amount per hour of the raw soil material, and the predicted supply amount, and raw soil material feeder speed correcting means for correcting a target value of the raw soil material feeder speed based on a comparison result of the first comparing means to control the speed of the raw soil material feeder.

EP 1 094160 A2 discloses a fluidized soil material supply machine comprising a machine body provided with a traveling member, a raw soil conveyer mounted to the machine body for conveying the raw soil from a raw soil hopper, a solidifying material supply device mounted to the machine body for supplying a solidifying material, a mixer mounted to the machine body for mixing the raw soil and the solidifying material to thereby produce a mixed soil, a mixed soil conveyer for conveying a mixed soil produced in the mixer, and a liquid supply unit for supplying a liquid to be mixed with the raw soil and the solidifying material.

JP2000104243 A discloses a self-propelled soil improvement machine for stably manufacturing the high quality soil improvement material by accurately controlling a mixture ratio of earth and sand and soil improvement material, when the soil improvement material is added to earth and sand in a treatment tank. A supplying mechanism part which consists of a earth and sand supplying hopper and a soil improvement material supplying hopper and treatment mechanism part attached a paddle mixer in a treatment tank are provided on a main body frame provided on a lower traveling body. The earth and sand and the soil improvement material are mixed and agitated in the treatment tank, and are then carried to an exhaust part. The paddle mixer is rotatably driven by a hydraulic motor.

WO 2009/034469 A2 discloses a soil and/or rock conditioning machine including a feed hopper to feed material to be conditioned to a feed conveyor and a mixing chamber including one or more rotors to accelerate the material particles direct from the end of the feed conveyor against inclined surfaces in the mixing chamber.

### Summary of the invention

Unlike traditional methods, wherein the spreading and mixing of the soil stabilizer take place on the ground, the present disclosure relates to spreading a soil stabilizer on soil and mixing the soil stabilizer with the soil in a mobile soil mixing system. The present inventors have realized that by making use of a system resembling a box feeder, the process efficiency can be enhanced significantly.

The present disclosure relates to a soil stabilization system as defined in claim 1.

Commonly, in a construction site the excavated soil or soil of another source is towed away on trucks and replaced with dry gravel, or stored temporarily around the construction site or at a dedicated area for later backfilling. A disadvantage of this practise is that a huge amount of energy and man power is used for transportation and temporary storage demands a large space. Another disadvantage of existing soil stabilization techniques is that the clumped soil is only insufficiently mixed with the soil stabilizer. Advantageously, the presently disclosed approach is capable of receiving the soil, optionally storing the soil and feeding back stabilized soil to the construction site. An improved consolidation of the soil avoids the use of a special replacement soil completely or at least reduce to a considerable level. Furthermore, such an approach is particularly space-saving and provides an efficient solution for mixing the soil with the soil stabilizer.

Another advantage of the presently disclosed approach is that the soil stabilizer is provided to the soil by means of a controllable feeder unit. Furthermore, the blend of the soil and soil stabilizer takes place under a predefined mixing speed and direction. Specifications of the feeder unit such as dosing as well as mixing specifications can be altered depending on the specific project, soil or additive type, introducing a great flexibility to the system.

Clay box feeders used for example in brickyards for feeding clay into the oven, also typically comprise a conveyor and a rotatable mixer unit at the outlet, however the rotatable mixer unit is configured to turn slowly with a frequency of less than 400 RPM and with a direction of rotation which is opposite the direction of rotation defined by the conveyor, i.e. such that the angular momentum of the rotatable mixer unit points **right** relative to the movement of the soil towards the rotatable mixer unit. A great advantage of the presently disclosed approach is that the rotation direction of the mixer and the conveyor unit is chosen such that the system can handle relatively big rock fragments while delivering a homogeneous mixture. This is provided by having a higher rotation frequency and with a direction of rotation, which is opposite the direction of rotation defined by the conveyor, i.e. such that the angular momentum of the rotatable mixer unit points **left** relative to the movement of the soil towards the rotatable mixer unit The system is advantageously configured such that first the soil stabilizer is provided on the soil; then, the rotatable mixer blends the soil and the soil stabilizer. Thus, at least a first chemical reaction takes place when the soil stabilizer is spread on the soil, and the chemical reaction continues when the mixture blends by means of the rotatable mixer unit. A further advantage of having a series of chemical reaction may be a distributed steam output.

Additionally, an arrangement of the presently disclosed system enables an easy access to the rotatable mixer unit from both sides. As a result, any stones that may be stuck in the rotatable mixer unit can be removed, thus the risk of an equipment damage and prolonged downtime are reduced.

Furthermore, as the rotational mixer unit rotates around a same rotational direction as the conveyor unit, the mixture follows a longer path around a rotary axle of the rotatable mixer. Hence, the mixture can interact with the air longer; this may further improve the stabilization of the soil.

Additionally, the presently disclosed approach offers a possibility of providing the mixture of the soil and the soil stabilizer to deep excavated pits. The mixture can be fed back to a construction pit through a conveyor belt, placed after the rotatable mixture unit. This feature enhances the efficiency of the soil stabilization process in construction sites while decreasing the cost considerably.

A further advantage of the presently disclosed system is that the system can comprise at least one measuring unit configured for measuring the weight of soil on the first conveyor unit. Consequently, the weight percent of the soil stabilizer mixed into the soil can be calculated and controlled, resulting in an improved automation and efficiency during soil stabilization.

The present disclosure further relates to a soil stabilization method as defined in claim 16.

Consequently, the presently disclosed approach promises a decreased process time, resulting in a positive influence on the environment due to fewer emissions and lower costs by saving energy, materials, and equipment.

### Description of the drawings

The present disclosure will in the following be described in greater detail with reference to the accompanying drawings:
- Fig. 1: shows one embodiment of the presently disclosed soil stabilization system.
- Fig. 2: is one embodiment of a back view of the presently disclosed soil stabilization system.
- Fig. 3: is one embodiment of a front view of the presently disclosed soil stabilization system.
- Fig. 4: is one embodiment of the first conveyor unit and the rotatable mixer.
- Fig. 5: shows one embodiment of the first conveyor unit and the feeder unit.
- Fig. 6: shows one embodiment of the soil and the soil stabilizer before entering to the rotatable mixer unit.
- Fig. 7: shows one embodiment of the rotatable mixer unit mixing the soil and the soil stabilizer.
- Fig. 8: shows one embodiment of a conveyor unit for feeding the mixture to a construction pit.
- Figs. 9-10: shows one embodiment of the presently disclosed soil stabilization system with a panel mounted above the mixer unit for monitoring the mixer unit and controlling the feeding of soil stabilization.

### Detailed description

The presently disclosed system is intended for, but not exclusive to, soil stabilization. The system comprises at least one container configured to receive and store soil. The soil may for example be an excavated soil, excavated during construction of buildings. Alternatively, the soil may be provided from another source. The system further comprises at least a first conveyor unit located in the container. The first conveyor unit defines a direction of rotation wherein the first conveyor unit carries the soil and moves the soil towards an outlet located at one end of the container. The system further comprises at least one feeder unit for containing a soil stabilizer. The feeder unit is preferably located above the first conveyor unit such that the soil stabilizer can spread controllably on top of the soil at the outlet end of the container.

The soil stabilization system further comprises a rotatable mixer unit located at the outlet end of the container, preferably after the feeder unit, and can be configured for mixing the soil with the soil stabilizer to provide a mixture of the soil and the soil stabilizer.

An advantageous aspect of the presently disclosed approach is that the soil stabilization system can be configured such that a direction of rotation of the rotatable mixer unit corresponds to the direction of rotation defined by the conveyor unit. Preferably, the rotatable mixer unit can rotate around the same direction as the conveyor unit. As a result, the system can accommodate large rock fragments.

In an advantageous embodiment, the presently disclosed system is configured such that the direction of rotation of the rotatable mixer unit is reversible. The system may comprise a control unit such as a PLC control unit for controlling the direction of rotation. Furthermore, the soil stabilization system can be configured to monitor a rotation speed of the rotatable mixer. Consequently, the system can be configured to reverse the rotation direction of the rotatable mixer based on the speed of the rotatable mixer. For example, when an obstacle such as a fragment of a rock squeezes between the first conveyor and the rotatable mixer, the control unit can monitor and identify that the rotatable mixer cannot rotate and reverse the rotation direction of the rotatable mixer. After a few revolution, the rotation direction of the mixer can be re-reversed to the direction of rotation defined by the conveyor unit. If the obstacle is not loosened, the system can be configured to reverse and re-reverse the direction of the rotation of the mixer multiple times. The system can be further configured such that the system shuts off after a predefined consecutive change in the direction of rotation. Advantageously, the soil stabilization system can run safely and smoothly. Thus, in an alternative embodiment, the presently disclosed system is configured such that the direction of rotation of the first conveyor unit and/or the rotatable mixer unit is reversible.

In an embodiment, the system is configured to handle soil, comprising rock fragments of up to 25 cm in diameter. In a preferred embodiment, rock fragments are up to 30 cm in diameter, more preferably up to 35 cm in diameter. While the physical characterization of soil may alter in different location or in different construction sites, the proposed system can minimize a need for fine screening for rock fragments.

Another important aspect of the presently disclosed approach is that the carrying capacity of the container and the conveyor belt can be improved. In an embodiment, the conveyor unit comprises chain plates such that said conveyor unit is configured to withstand a load of at least 40 tons of soil. The conveyor unit may preferably be a conveyor belt made of lamellar steel chain plates. Advantageously, the system may be suitable for deeper construction pits as the conveyor unit can allocate 40 tons of soil.

The presently disclosed soil stabilization system is particularly suitable for excavated soil, such as clay and/or moler. The strength gain of stabilized soil is influenced by the water content needed to maintain the chemical reaction. In an embodiment, the soil has a water content of up to 20 %, more preferably up to 25 % weight percent by weight of soil.

However, a high water content of soil may result in an unfavourable interactions and poor engineering properties, such as swelling and high plasticity of the soil. Advantageously, chemical soil stabilizers interact between water and soil by chemical reactions and alter the behaviour of the soil. When supplying the soil stabilizer, it may be preferred that the soil stabilizer is provided per unit area of the soil in a controlled manner. Specifically, for the stabilizers that are in powder form, a uniform distribution of the stabilizer can be challenging. In an embodiment, the feeder unit comprises at least a second conveyor unit for providing the soil stabilizer. Advantageously, the second conveyor unit has a predefined speed and it is located above the first conveyor unit such that the soil stabilizer is provided to the soil on the first conveyor unit homogeneously. Thus, the proposed system can provide a uniform distribution of the stabilizer on per unit area of the soil.

In addition to the spreading technique of the soil stabilizer, dosing may be another important aspect. In an embodiment, the feeder unit is configured for controllably adding the soil stabilizer to the soil before the rotatable mixer unit mixes the soil with the soil stabilizer. This foresees that the feeding unit can comprise a metering device or a measuring sensor or mechanical means such that the soil stabilizer can be provided with a predefined amount. In an embodiment, a feed rate of the soil stabilizer is controlled by adjusting the speed of the second conveyor unit.

Furthermore, spreading the stabilizer on the soil before the rotatable mixer mixes them, has an advantage, because when burnt lime (calcium oxide) dissolves in water, it is converted through an exothermic reaction to calcium hydroxide (hydrated lime). Thus, this reaction develops heat and produces steam. By spreading the stabilizer on the soil before mixing results in a first reaction, which develops a first steam wave. Up on arrival of the mixture to the rotatable mixer unit a further reaction takes place, which develops a second steam wave. This stepwise procedure leads to a more complete chemical reaction enhancing the properties of the stabilized soil.

In an embodiment, the rotatable mixer unit has a rotation frequency of at least 350 rpm, more preferably at least 400 rpm, even more preferably at least 500 rpm, most preferably at least 600 rpm during mixing. While the rotational speed may need to be adjusted depending on the soil content and the stabilizer type, an advantage of the disclosed approach is that the rotatable mixer unit can rotate at the same direction of rotation as the first conveyor unit on which the soil and the spread of stabilizer situate. As a result, the mixture can be displaced and circulated more and the chemical reaction continues. An enhanced interaction of the mixture in the air may enhance the stability of the soil. Additionally, a high rotational speed improves the productivity of the system.

In an embodiment, the rotatable mixer unit comprises a rotary axle and a plurality of paddles located along the rotary axle and extending radially from the rotary axle.

In a further embodiment, the paddles comprise an L-shaped or T-shaped end formed from blade-like or shovel-like rigid elements for engagement with the soil on the conveyor. I.e., during soil mixing the paddles engage with soil and soil stabilizer on the conveyor such that the soil splits apart while mixing with the soil stabilizer. In a further preferred embodiment, the paddles extend from the rotary axle with various orientations such that the soil can be split and mixed efficiently. An advantage of this embodiment is that the paddles with smaller edge radius or T-shape paddles can reduce the amount of energy that needs to be used for mixing the soil to a similar stabilization degree, compared to paddles with larger edge radius or blunt end.

In a preferred embodiment a single rotatable mixer is used, however, in an alternative embodiment, two or more rotatable mixer rotating with an opposite direction of rotation is used. This implies that at least one of the rotatable mixer can rotate with the same rotational direction as the first conveyor unit on which the soil and spread of soil stabilizer is provided.

Depending on the nature and water content of the soil and the stabilizer, the final properties of the stabilized soil may differ. In an embodiment, the soil stabilizer is calcium oxide. Furthermore, it is preferred that the feed rate of the soil or the soil stabilizer can be adjusted such that at a constant mixing ratio, a desirable degree of mixing can be achieved. Hence, in a further embodiment, the amount of the soil stabilizer is at least 2 weight percent, more preferably at least 3 weight percent, most preferably at least 4 weight percent by weight of soil. An advantage of using calcium oxide (burnt lime) for soil stabilization, i.e., lime stabilization, is that the soil improved with burnt lime leads to an immediate reduction in water content.

In a further embodiment, the stabilized soil has a water content of less than 10 %, more preferably less than 8 % after the excavated soil is mixed with the soil stabilizer. An advantage of this embodiment is that decreased water content by means of lime stabilization increases load-bearing capacity and reduces plasticity. As a result, the stabilized soil can carry ordinary soil materials and it can be compacted in satisfactory layers. This foresees that due to the increased load-bearing capacity, a significant reduction in the thickness of the bottom protection layer can be expected, thereby saving from expensive raw materials of sand and gravel.

In an embodiment, the soil stabilization system comprises at least one measuring unit for measuring the weight of soil on the first conveyor. The measuring unit may be a sensor for measuring the force exerted on the first conveyor unit. The measuring unit may be located in accordance with the first conveyor at the outlet end of the container, such that the measuring unit measures the weight of the mixture of the soil and the soil stabilizer on the first conveyor. Thus, in a preferred embodiment, the system can be configured to measure the weight of soil and the soil stabilizer on the first conveyor.

In an embodiment, the soil stabilization system comprises at least a second measuring unit for measuring the amount of soil stabilizer provided to the soil. The second measuring unit may for example be a laser scanner for measuring the soil stabilizer amount provided to the soil. Consequently, the soil stabilizer added to the soil can be controlled in relation to the weight of the soil and soil stabilizer mixture. Thus, a desirable degree of mixing can be achieved.

In an advantageous embodiment, the soil stabilization system further comprises a regulator unit, for adjusting a feed rate of the soil stabilizer. Preferably, the regulator unit regulates the rotation speed of the second conveyor. Thus, amount of soil stabilizer provided to the soil can be increased and/or decreased by means of the regulator unit resulting in a flexible soil stabilization system.

A further advantage of the present disclosure is to provide an efficient and safe soil stabilization system. The proposed system offers such an efficient soil stabilization system that the amount of the soil stabilizer used for stabilizing the soil can be decreased significantly. In an embodiment, the system is configured such that the amount of soil stabilizer added during operation is less than 4 weight percent, more preferably less than 2 weight percent, more preferably less than 0.5 weight percent by weight of soil. As explained above this can for example be controlled by knowing the weight of the soil going in to the system and by knowing the weight of soil stabilizer added during operation. The presently disclosed system has surprisingly been found to be very efficient in mixing soil and soil stabilizer such that the soil stabilizing effect of the soil stabilizer can be optimized. In the hitherto known method of soil stabilization an amount of approx. 2 weight percent of soil stabilizer is spread on the ground surface of the soil before being mixed into the soil by for example tractors with mixing units. However, with the presently disclosed system the amount of soil stabilizer used can be much reduced, for example below 1 weight percent or even below 0.6 or 0.5 weight percent, because the mixing is more efficient, in particular when using calcium oxide as the soil stabilizer. This is important for both economic and environmental reasons. For example, it requires a lot of energy, typically fossil energy, to produce calcium oxide and the presently disclosed approach therefore provides a solution that can stabilize soil with much lower CO₂ emission.

In an embodiment, the system comprises at least a third conveyor unit configured to receive the mixture of the soil and the soil stabilizer. In a further advantageous embodiment of the present disclosure, the third conveyor unit is configured to move the mixture of the soil and the soil stabilizer to a predefined location.

Preferably, the presently disclosed system is mobile, e.g. movable on a truck, such that the stabilized soil can be provided to construction pits, which are at different locations.

The present disclosure further relates to a soil stabilization method, comprising the steps of receiving and containing excavated soil in at least one container, moving the soil towards an outlet end of the container by means of a conveyor unit, feeding a soil stabilizer controllably from a feeding unit to the soil on the conveyor unit, at the outlet end of the container, mixing the soil and the soil stabilizer with a rotatable mixer unit located in the conveying direction and after the feeding unit, such that a direction of rotation of the rotatable mixer unit corresponds to a direction of rotation defined by the conveyor unit. An aspect of the presently disclosed method is that the amount of the soil stabilizer added to the soil can be less than 1 weight percent relative to the amount of soil. In a preferred embodiment, the soil stabilizer added to the soil can be less than or equal to 0.5 weight percent relative to the amount of soil. This foresees that, in an embodiment the weight percent of a soil stabilizer is continuously calculated by weight of soil.

In an embodiment of the present disclosure, the weight of soil on the first conveyor unit is measured. In a further embodiment, the amount of soil stabilizer provided to the soil is measured. Preferably, the weight of soil and the soil stabilizer on the first conveyor can be measured. In an advantageous embodiment, a feed rate of the soil stabilizer is adjusted. This can for example be performed by adjusting the speed of the second conveyor feeding the soil stabilizer such that a feed rate of the soil stabilizer is controlled. Consequently, the presently disclosed method can control the amount of soil stabilizer provided to the soil such that the amount of the soil stabilizer added during operation can be at least 2 weight percent, more preferably at least 4 weight percent by weight of soil. In another embodiment, the method can comprise controlling the amount of soil stabilizer provided to the soil such that the amount of the soil stabilizer added during operation is less than 2 weight percent, preferably less than 1 weight percent by weight of soil, more preferably less than 0.8 weight percent by weight of soil, even more preferably less than 0.6 weight percent by weight of soil, most preferably less than 0.5 weight percent by weight of soil.

Furthermore, the soil and the soil stabilizer can be mixed by means of a rotatable mixer unit having a rotation frequency of at least 350 rpm, more preferably at least 500 rpm, most preferably at least 600 rpm during mixing. In an embodiment, the speed of the rotatable mixer is monitored such that the direction of rotation of the rotatable mixer unit can be reversed when the speed of the rotatable mixer is under a predefined speed value. In a further embodiment, the direction of rotation of the rotatable mixer unit can be reversed for a predefined number of rotation.

In an advantageous embodiment, the soil stabilization system and/or the method of the present disclosure can handle obstacles and large rock fragments in the soil by monitoring the rotatable mixer unit and at least short-term, e.g. on the order of below 1 minute, or 30 seconds, maybe just a few seconds, reversing the direction of rotation of the rotatable mixer unit when the rotational speed of rotatable mixer drops below a predefined threshold, e.g. below 90% or below 80% or below 70% of the current rotational speed. Thereby the passage can be cleared. This process can be repeated a few times if it does not work. Ultimately the system can be configured to stop if the mixer unit cannot function properly. Thus, the present disclosure offers an efficient approach for mixing the soil and the soil stabilizer with an optimized weight ratio while providing handling of rock fragments of different sizes continuously.

### Detailed description of the drawings

The present disclosure will now be described more fully hereinafter with reference to the accompanying exemplary embodiments shown in the drawings when applicable. However, it is to be noted that the invention may be embodied in various forms. The hereby provided embodiments are to guide a thorough and complete disclosure.

Hence, embodiments set forth herein should not be interpreted as limiting but be construed as a tool for delivering the scope of the invention to those who are skilled in the art. Same reference numbers refers to the same element throughout the document.

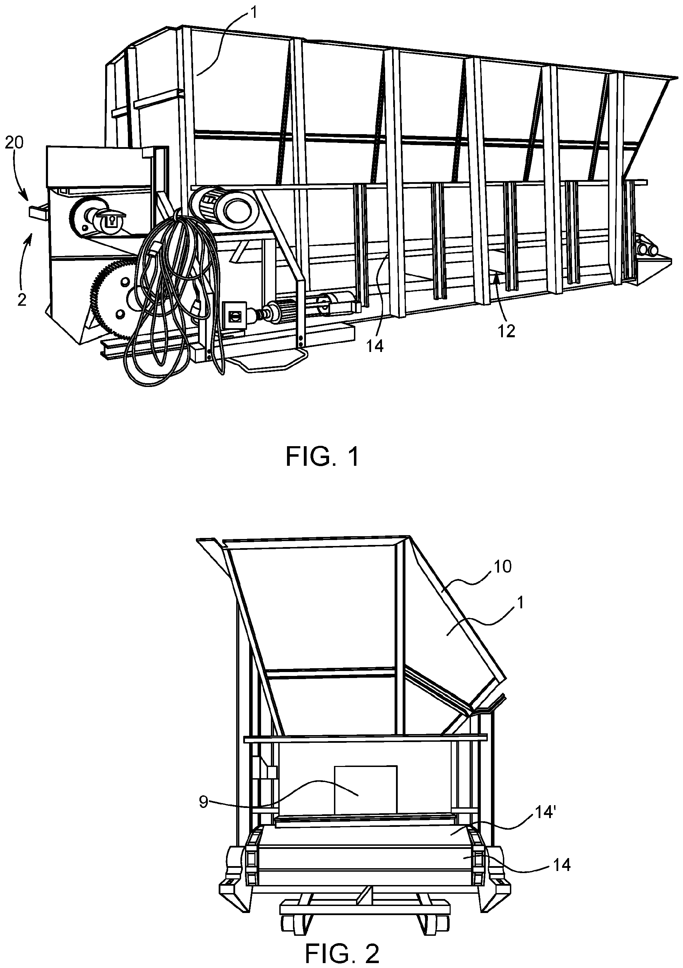

Fig. 1 shows one embodiment of the presently disclosed soil stabilization system. The system comprises a container 1 for receiving a substance, such as soil and a first conveyor unit 12 located at the bottom of the container 1. In this specific embodiment, the container is part of a box feeder, which can receive and store a content up to 150 m³. The conveyor unit 12 is configured for moving the soil in the container 1 towards an outlet 20 at one end of the container 1. At the outlet 20, there is a rotatable mixer unit 2, with a rotation axis parallel to a rotation axis of a conveyor belt 14 of the conveyor unit 12. As shown in Fig. 2, conveyor belt 14 is at the bottom of the container 1, such that when the soil is provided to the container 1, the soil sits on the bottom of the container 1 on a top surface 14' of the conveyor belt 14. The soil can be provided from an upper opening 10 at the upper side of the container 1. Furthermore, smaller amount of the same or another substance can be provided through a middle opening 9, located at a lower level than the upper opening 10 at the back side of the container 1, as exemplified in Fig. 2.

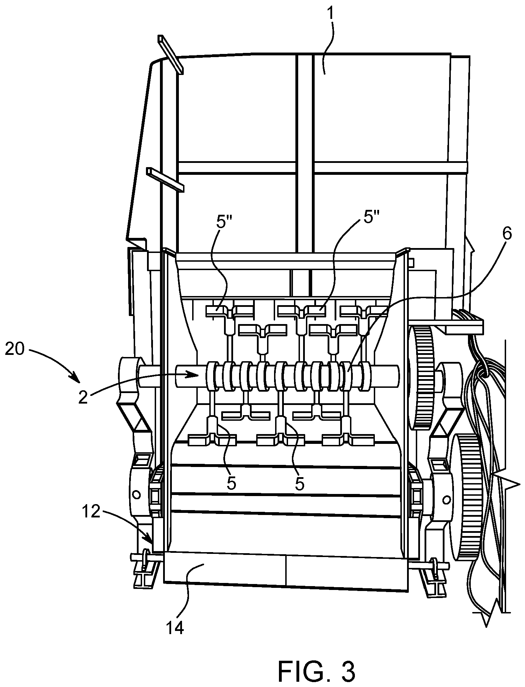

Fig. 3 shows one embodiment of the front view of the presently disclosed soil stabilization system. The first conveyor unit 12 is configured for moving the soil towards the outlet 20 of the container. The rotatable mixer unit 2, located at the outlet 20 of the container 1 and configured for mixing the soil with the soil stabilizer to provide a mixture of the soil and the soil stabilizer. The mixer unit 2 comprises a rotary axle 6 and paddles 5 extending from the rotary axle 6. Each paddle 5 is positioned along the rotary axle 6 and has an extension length, extending from the centre of the rotary axle 6. The extended end of the paddles are T-shaped (5"). Furthermore, the extension length and the orientation of each paddle 5 may be different. In this preferred embodiment, the extended edges of the paddles are blade-like or knife-like or shovel like, which enhances the quality of the mixture and the soil stabilization process such that soil can be mixed sufficiently, homogeneously and efficiently.

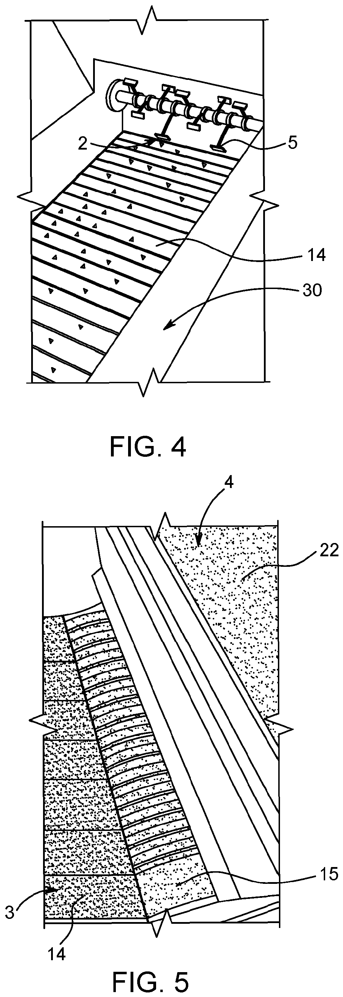

Fig. 4 is one embodiment of the conveyor belt 14 and the rotatable mixer unit 2, seen from the inside 30 of the container 1. Conveyor belt 14, has a lamellar structure and made of steel such that it can withstand a high weight of soil up to 40 tons. The design of the steel plate contributes to a high efficiency and provides a good distribution of the load to the underlying construction. Additionally, Fig. 4 shows one embodiment of the paddles, wherein paddles have a blunt tip (5').

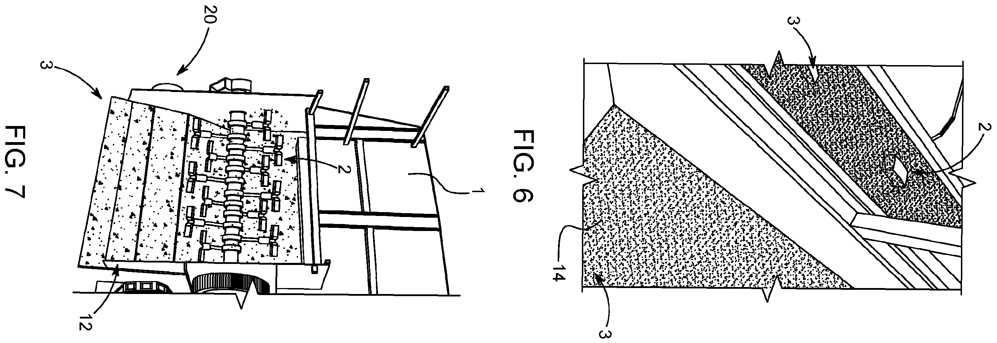

The system comprises at least one feeder unit for containing and feeding a soil stabilizer to the soil. Fig. 5 shows one embodiment the feeder unit 4. Said feeder unit 4 stores a soil stabilizer 22, such as calcium oxide, also known as burnt lime, and comprises a second conveyor belt 15. Furthermore, the feeder unit 4 has a dosing mechanism, such that a predefined amount of burnt lime 22 is provided on the second conveyor belt 15. The second conveyor belt 15 rotates with a predefined speed and has direction of rotation same as the direction of rotation of the first conveyor belt 14. Thus, upon further rotation of the second conveyor belt 15, which is located above the first conveyor belt 14, burnt lime 22 is distributed on the soil conveyed on the first conveyor belt 14, homogeneously. The spreading of the burnt lime 22 on the soil results in a first chemical reaction and a mixture 3 of the soil and the soil stabilizer. The mixture 3 is conveyed on the first conveyor belt 14 further, until the mixture 3 reaches to the rotatable mixer unit 2 as shown in Fig. 6. This arrangement of longitudinal space behind the rotatable mixer unit 2 permits an easy maintenance of the rotatable mixer unit 2. Because the paddles 5 can be reached easily for any adjustments in operative conditions, for example in case of production stop due to large rock fragments, the maintenance and service of the paddles 5 and the rotatable mixer unit 2 can be carried out efficiently and smoothly.

Fig. 7 shows one embodiment of the rotatable mixer unit 2 seen from front, i.e., from the outlet 20 side of the container 1. The rotatable mixer unit 2 mixes the soil and the soil stabilizer mixture 3. A great advantage of this system is that the direction of rotation of the rotatable mixer unit 2 corresponds to the direction of rotation of the first conveyor belt 14. This implies that the mixture 3, lying on the conveyor belt 14 is received by the rotatable mixer unit 2 such that the paddles 5 displace the mixture 3 towards an opposite direction of the mixture's initial relative direction of movement. Thus, the mixture interacts with the paddles 5 for a longer time and a larger surface area of the mixture 3 gets in contact with air. It implicates that the chemical reaction between the soil and the stabilizer is triggered to a higher degree.

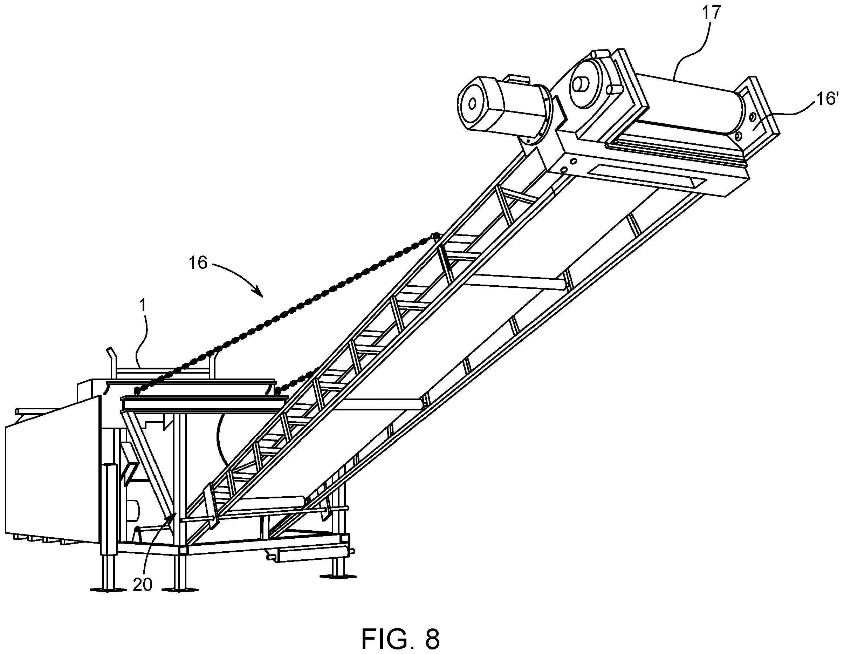

In a preferred embodiment, exemplary illustrated in fig. 8, the soil stabilization system comprises a third conveyor unit 16. The third conveyor unit 16 is mounted on the bottom of the container 1 at one end where the outlet 20 is located. The third conveyor unit 16 is located under the rotatable mixer unit 2 such that the mixture 3 is released from the rotatable mixture unit 2 and collected by and moved on a conveyor belt 17 of the third conveyor unit 16. The tip 16' of the conveyor unit is arranged such that the mixture is fed continuously to a predefined region.

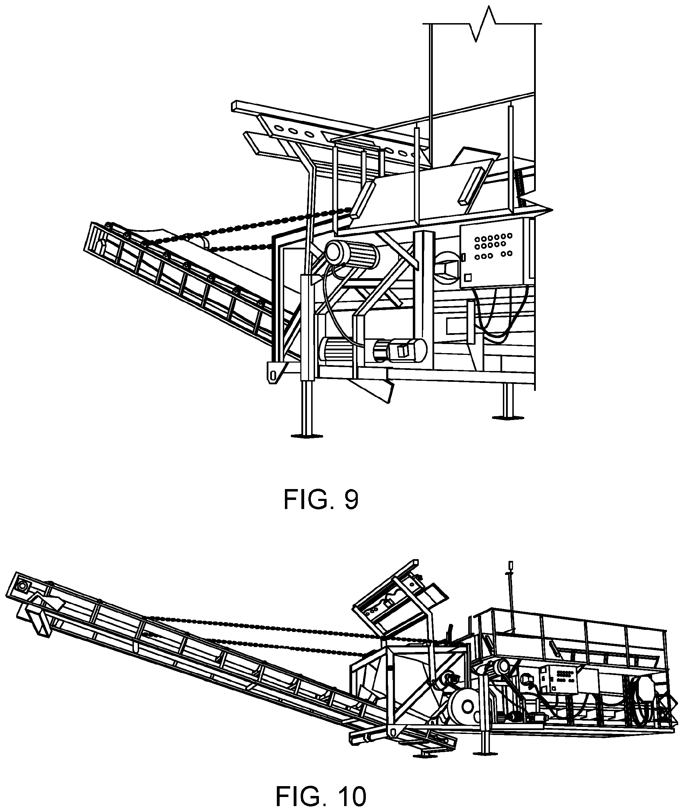

An additional preferred embodiment, exemplary illustrated from the side and behind in fig. 9 and from the side in fig. 10, also comprises the third conveyor unit 16, as used in fig. 8, but also a panel mounted above the mixer unit for monitoring the mixer unit and controlling the feeding of soil stabilization.

## Claims

1. A soil stabilization system, comprising:
- at least one container (1) for receiving and containing soil,
- at least a first conveyor unit (12) located in the container and configured for moving the soil towards an outlet (20) end of the container (1), the conveyor unit (12) defining a direction of rotation,
- at least one measuring unit configured for measuring the weight of soil on the first conveyor unit (12),
- at least one feeder unit (4) for containing a soil stabilizer (22) located towards the outlet (20) end of the container (1) and configured for controllably feeding the soil stabilizer (22) to soil on the first conveyor unit (12), and
- a rotatable mixer unit (2) located at the outlet (20) end of the container (1) and configured for mixing the soil with the soil stabilizer (22) to provide a mixture (3) of the soil and the soil stabilizer (22), and
wherein the soil stabilization system is configured to calculate and control the weight percent of the soil stabilizer (22) mixed into the soil,
wherein the soil stabilization system is configured such that a direction of rotation of the rotatable mixer unit (2) corresponds to the direction of rotation defined by the conveyor unit (12), **characterized in that** said rotatable mixer unit (2) comprises a rotary axle (6) and a plurality of paddles (5) located along the rotary axle and extending radially from the rotary axle, **in that** the paddles (5) comprise an L-shaped or T-shaped end formed from blade-like or shovel-like rigid element for engagement with the soil on the conveyor, and **in that** the paddles (5) extend from the rotary axle (6) with various orientations such that the soil can be split and mixed effectively.

2. The soil stabilization system according to the preceding claim, configured such that the amount of soil stabilizer (22) added to the soil during operation is less than 1 weight percent by weight of soil, preferably less than or equal to 0.5 weight percent by weight of soil.

3. The soil stabilization system according to any of the preceding claims, configured to handle obstacles and large rock fragments in the soil by monitoring the rotatable mixer unit (2) and at least short-term reversing the direction of rotation of the rotatable mixer unit (2) when the rotational speed of rotatable mixer drops below a predefined threshold.

4. The soil stabilization system according to any of the preceding claims, configured to handle excavated soil, such as clay and/or moler, comprising rock fragments of up to 30 cm in diameter.

5. The soil stabilization system according to any of the preceding claims, wherein the conveyor unit (12) comprises chain plates such that said first conveyor unit (12) is configured to withstand a load of at least 40 tons of soil.

6. The soil stabilization system according to any of the preceding claims, configured such that the feeder unit (4) controllably adds soil stabilizer (22) to the soil before the rotatable mixer unit (2) mixes the soil with the soil stabilizer (22).

7. The soil stabilization system according to any of the preceding claims, configured such that said rotatable mixer unit (2) has a rotation frequency of at least 400 rpm during mixing.

8. A soil stabilization system according any of the preceding claims, configured such that the mixture (3) has a water content of less than 10 %, more preferably less than 8 %.

9. A soil stabilization system according to any of the preceding claims, wherein the system is configured such that the direction of rotation of the rotatable mixer unit (2) is reversible.

10. The soil stabilization system according to any of the preceding claims, wherein the feeder unit (4) comprises at least a second conveyor unit (15) having a predefined speed and located above the first conveyor unit (12) and configured to provide the soil stabilizer (22) to the soil on the first conveyor unit (12).

11. The soil stabilization system according to claim 10, configured such that a feed rate of the soil stabilizer (22) is controlled by adjusting the speed of the second conveyor unit (15).

12. The soil stabilization system according to any of the preceding claims, further comprising at least one measuring unit configured for measuring the weight of soil on the first conveyor.

13. The soil stabilization system according to any of the preceding claims, further comprising at least a second measuring unit configured for measuring the amount of soil stabilizer (22) provided to the soil.

14. The soil stabilization system according to any of the preceding claims, wherein the system is configured to measure the weight of soil and the soil stabilizer (22) on the first conveyor.

15. The soil stabilization system according to any of the preceding claims, further comprising a regulator unit configured for adjusting a feed rate of the soil stabilizer (22).

16. A soil stabilization method, comprising the steps of:
- receiving and containing excavated soil in at least one container (1),
- moving the soil towards an outlet (20) end of the container (1) by means of a conveyor unit (12),
- feeding a soil stabilizer (22) controllably from a feeding unit to the soil on the conveyor unit (12), at the outlet (20) end of the container (1),
- mixing the soil and the soil stabilizer (22) with a rotatable mixer unit (2) located in the conveying direction and after the feeding unit, **characterised in that** a direction of rotation of the rotatable mixer unit (2) corresponds to a direction of rotation defined by the conveyor unit (12),
**in that** the amount of the soil stabilizer (22) added to the soil is less than 1 weight percent relative to the amount of soil, **in that** said rotatable mixer unit (2) comprises a rotary axle (6) and a plurality of paddles (5) located along the rotary axle (6) and extending radially from the rotary axle (6), **in that** the paddles (5) comprise an L-shaped or T-shaped end formed from blade-like or shovel-like rigid element engaging with the soil and soil stabilizer (22) on the conveyor such that the soil splits apart while mixing with the soil stabilizer (22), and **in that** the paddles (5) extend from the rotary axle (6) with various orientations such that the soil splits and is mixed efficiently.

## Patentansprüche

1. Bodenstabilisierungssystem, umfassend:
- mindestens einen Behälter (1) zum Aufnehmen und Enthalten von Boden,
- mindestens eine erste Fördereinheit (12), die sich im Behälter befindet und zum Bewegen des Bodens in Richtung eines Auslassendes (20) des Behälters (1) konfiguriert ist, wobei die Fördereinheit (12) eine Drehrichtung definiert,
- mindestens eine Messeinheit, die zum Messen des Gewichts des Bodens auf der ersten Fördereinheit (12) konfiguriert ist,
- mindestens eine Zuführeinheit (4) zum Enthalten eines Bodenstabilisators (22), die sich in Richtung des Auslassendes (20) des Behälters (1) befindet und konfiguriert ist, um den Bodenstabilisator (22) gesteuert dem Boden auf der ersten Fördereinheit (12) zuzuführen, und
- eine drehbare Mischeinheit (2), die sich am Auslassende (20) des Behälters (1) befindet und zum Mischen des Bodens mit dem Bodenstabilisator (22) konfiguriert ist, um eine Mischung (3) aus dem Boden und dem Bodenstabilisator (22) bereitzustellen, und
wobei das Bodenstabilisierungssystem konfiguriert ist, um den Gewichtsprozentanteil des in den Boden eingemischten Bodenstabilisators (22) zu berechnen und zu steuern,
wobei das Bodenstabilisierungssystem so konfiguriert ist, dass eine Drehrichtung der drehbaren Mischeinheit (2) der durch die Fördereinheit (12) definierten Drehrichtung entspricht, **dadurch gekennzeichnet, dass** die drehbare Mischeinheit (2) eine Drehachse (6) und eine Vielzahl von Schaufeln (5) umfasst, die sich entlang der Drehachse befinden und sich radial von der Drehachse erstrecken, dass die Schaufeln (5) ein L-förmiges oder T-förmiges Ende umfassen, das aus einem klingenartigen oder schaufelartigen starren Element zum Eingriff mit dem Boden auf dem Förderer gebildet ist, und dass sich die Schaufeln (5) mit verschiedenen Ausrichtungen von der Drehachse (6) erstrecken, so dass der Boden effizient gespalten und gemischt werden kann.

2. Bodenstabilisierungssystem nach dem vorstehenden Anspruch, das so konfiguriert ist, dass die Menge an Bodenstabilisator (22), die während des Betriebs dem Boden hinzugefügt wird, weniger als 1 Gewichtsprozent des Bodengewichts, vorzugsweise weniger als oder gleich 0,5 Gewichtsprozent des Bodengewichts beträgt.

3. Bodenstabilisierungssystem nach einem der vorstehenden Ansprüche, das zum Bewältigen von Hindernissen und großen Gesteinsfragmenten im Boden konfiguriert ist, indem die drehbare Mischeinheit (2) überwacht wird und die Drehrichtung der drehbaren Mischeinheit (2) mindestens kurzzeitig umgekehrt wird, wenn die Drehgeschwindigkeit des drehbaren Mischers unter einen vordefinierten Schwellenwert fällt.

4. Bodenstabilisierungssystem nach einem der vorstehenden Ansprüche, das für die Handhabung von ausgehobenem Boden, wie beispielsweise Lehm und/oder Moler, umfassend Gesteinsfragmente mit einem Durchmesser von bis zu 30 cm, konfiguriert ist.

5. Bodenstabilisierungssystem nach einem der vorstehenden Ansprüche, wobei die Fördereinheit (12) Kettenplatten umfasst, so dass die erste Fördereinheit (12) konfiguriert ist, um einer Last von mindestens 40 Tonnen an Boden standzuhalten.

6. Bodenstabilisierungssystem nach einem der vorstehenden Ansprüche, das so konfiguriert ist, dass die Zuführeinheit (4) dem Boden gesteuert Bodenstabilisator (22) hinzufügt, bevor die drehbare Mischeinheit (2) den Boden mit dem Bodenstabilisator (22) vermischt.

7. Bodenstabilisierungssystem nach einem der vorstehenden Ansprüche, das so konfiguriert ist, dass die drehbare Mischeinheit (2) während des Mischens eine Drehfrequenz von mindestens 400 U/min aufweist.

8. Bodenstabilisierungssystem nach einem der vorstehenden Ansprüche, das so konfiguriert ist, dass die Mischung (3) einen Wassergehalt von weniger als 10 %, bevorzugter weniger als 8 % aufweist.

9. Bodenstabilisierungssystem nach einem der vorstehenden Ansprüche, wobei das System so konfiguriert ist, dass die Drehrichtung der drehbaren Mischeinheit (2) umkehrbar ist.

10. Bodenstabilisierungssystem nach einem der vorstehenden Ansprüche, wobei die Zuführeinheit (4) mindestens eine zweite Fördereinheit (15) umfasst, die eine vordefinierte Geschwindigkeit aufweist und sich oberhalb der ersten Fördereinheit (12) befindet und konfiguriert ist, um dem Boden den Bodenstabilisator (22) auf der ersten Fördereinheit (12) bereitzustellen.

11. Bodenstabilisierungssystem nach Anspruch 10, das so konfiguriert ist, dass eine Zuführrate des Bodenstabilisators (22) durch Einstellen der Geschwindigkeit der zweiten Fördereinheit (15) gesteuert wird.

12. Bodenstabilisierungssystem nach einem der vorstehenden Ansprüche, das weiter mindestens eine Messeinheit umfasst, die zum Messen des Gewichts des Bodens auf dem ersten Förderer konfiguriert ist.

13. Bodenstabilisierungssystem nach einem der vorstehenden Ansprüche, das weiter mindestens eine zweite Messeinheit umfasst, die zum Messen der dem Boden bereitgestellten Menge an Bodenstabilisator (22) konfiguriert ist.

14. Bodenstabilisierungssystem nach einem der vorstehenden Ansprüche, wobei das System konfiguriert ist, um das Gewicht des Bodens und des Bodenstabilisators (22) auf dem ersten Förderer zu messen.

15. Bodenstabilisierungssystem nach einem der vorstehenden Ansprüche, das weiter eine Reguliereinheit umfasst, die zum Einstellen einer Zuführrate des Bodenstabilisators (22) konfiguriert ist.

16. Verfahren zur Bodenstabilisierung, das die folgenden Schritte umfasst:
- Aufnehmen und Bereitstellen von ausgehobenem Boden in mindestens einem Behälter (1),
- Bewegen des Bodens zu einem Auslassende (20) des Behälters (1) mittels einer Fördereinheit (12),
- gesteuertes Zuführen eines Bodenstabilisators (22) von einer Zuführeinheit zu dem Boden auf der Fördereinheit (12) am Auslassende (20) des Behälters (1),
- Mischen des Bodens und des Bodenstabilisators (22) mit einer sich in der Förderrichtung und nach der Zuführeinheit befindlichen drehbaren Mischeinheit (2), **dadurch gekennzeichnet, dass** eine Drehrichtung der drehbaren Mischeinheit (2) einer durch die Fördereinheit (12) definierten Drehrichtung entspricht,
dass die Menge des dem Boden hinzugefügten Bodenstabilisators (22) weniger als 1 Gewichtsprozent im Verhältnis zur Bodenmenge beträgt, dass die drehbare Mischeinheit (2) eine Drehachse (6) und eine Vielzahl von Schaufeln (5) umfasst, die sich entlang der Drehachse (6) befinden und sich radial von der Drehachse (6) erstrecken, dass die Schaufeln (5) ein L-förmiges oder T-förmiges Ende umfassen, das aus einem klingenartigen oder schaufelartigen starren Element gebildet ist, das mit dem Boden und dem Bodenstabilisator (22) auf dem Förderer in Eingriff steht, so dass der Boden beim Mischen mit dem Bodenstabilisator (22) aufgespalten wird, und dass sich die Schaufeln (5) mit verschiedenen Ausrichtungen von der Drehachse (6) erstrecken, so dass der Boden effizient gespalten und gemischt wird.

## Revendications

1. Système de stabilisation du sol, comprenant :
- au moins un conteneur (1) pour recevoir et contenir de la terre,
- au moins une première unité de transport (12) située dans le conteneur et configurée pour déplacer la terre vers une extrémité de sortie (20) du conteneur (1), l'unité de transport (12) définissant une direction de rotation,
- au moins une unité de mesure configurée pour mesurer le poids de la terre sur la première unité de transport (12),
- au moins une unité d'alimentation (4) pour contenir un stabilisateur de sol (22) située vers l'extrémité de sortie (20) du conteneur (1) et configurée pour alimenter de manière contrôlable le stabilisateur de sol (22) vers la terre sur la première unité de transport (12), et
- une unité de mélangeur rotatif (2) située à l'extrémité de sortie (20) du conteneur (1) et configurée pour mélanger la terre avec le stabilisateur de sol (22) pour fournir un mélange (3) de la terre et du stabilisateur de sol (22), et
dans lequel le système de stabilisation du sol est configuré pour calculer et réguler le pourcentage en poids du stabilisateur de sol (22) mélangé à la terre,
dans lequel le système de stabilisation du sol est configuré de telle sorte qu'une direction de rotation de l'unité de mélangeur rotatif (2) corresponde à la direction de rotation définie par l'unité de transport (12), **caractérisé en ce que** ladite unité de mélangeur rotatif (2) comprend un axe rotatif (6) et une pluralité de palettes (5) situées le long de l'axe rotatif et s'étendant radialement à partir de l'axe rotatif, **en ce que** les palettes (5) comprennent une extrémité en forme de L ou en forme de T formée à partir d'un élément rigide en forme de lame ou en forme de pelle pour venir en prise avec la terre sur le transporteur, et **en ce que** les palettes (5) s'étendent à partir de l'axe rotatif (6) avec diverses orientations de telle sorte que la terre puisse être divisée et mélangée efficacement.

2. Système de stabilisation du sol selon la revendication précédente, configuré de telle sorte que la quantité de stabilisateur du sol (22) ajoutée au sol pendant le fonctionnement soit inférieure à 1 pour cent en poids de la terre, de préférence inférieure ou égale à 0,5 pour cent en poids de la terre.

3. Système de stabilisation du sol selon l'une quelconque des revendications précédentes, configuré pour traiter des obstacles et des gros fragments de roche dans la terre en surveillant l'unité de mélangeur rotatif (2) et en inversant au moins à court terme la direction de rotation de l'unité de mélangeur rotatif (2) lorsque la vitesse de rotation du mélangeur rotatif tombe en dessous d'un seuil prédéfini.

4. Système de stabilisation du sol selon l'une quelconque des revendications précédentes, configuré pour traiter la terre excavée, telle que de l'argile et/ou du moler, comprenant des fragments de roche allant jusqu'à 30 cm de diamètre.

5. Système de stabilisation du sol selon l'une quelconque des revendications précédentes, dans lequel l'unité de transport (12) comprend des plaques de chaîne de telle sorte que ladite première unité de transport (12) soit configurée pour résister à une charge d'au moins 40 tonnes de terre.

6. Système de stabilisation du sol selon l'une quelconque des revendications précédentes, configuré de telle sorte que l'unité d'alimentation (4) ajoute de manière contrôlable un stabilisateur de sol (22) à la terre avant que l'unité de mélangeur rotatif (2) ne mélange la terre avec le stabilisateur de sol (22).

7. Système de stabilisation du sol selon l'une quelconque des revendications précédentes, configuré de telle sorte que ladite unité de mélangeur rotatif (2) présente une fréquence de rotation d'au moins 400 tr/min pendant le mélange.

8. Système de stabilisation du sol selon l'une quelconque des revendications précédentes, configuré de telle sorte que le mélange (3) présente une teneur en eau inférieure à 10 %, plus préférentiellement inférieure à 8 %.

9. Système de stabilisation du sol selon l'une quelconque des revendications précédentes, dans lequel le système est configuré de telle sorte que la direction de rotation de l'unité de mélangeur rotatif (2) soit réversible.

10. Système de stabilisation du sol selon l'une quelconque des revendications précédentes, dans lequel l'unité d'alimentation (4) comprend au moins une seconde unité de transport (15) présentant une vitesse prédéfinie et située au-dessus de la première unité de transport (12) et configurée pour fournir le stabilisateur de sol (22) à la terre sur la première unité de transport (12).

11. Système de stabilisation du sol selon la revendication 10, configuré de telle sorte qu'un débit d'alimentation du stabilisateur de sol (22) soit régulé en ajustant la vitesse de la seconde unité de transport (15).

12. Système de stabilisation du sol selon l'une quelconque des revendications précédentes, comprenant en outre au moins une unité de mesure configurée pour mesurer le poids de la terre sur le premier transporteur.

13. Système de stabilisation du sol selon l'une quelconque des revendications précédentes, comprenant en outre au moins une seconde unité de mesure configurée pour mesurer la quantité de stabilisateur de sol (22) fournie à la terre.

14. Système de stabilisation du sol selon l'une quelconque des revendications précédentes, dans lequel le système est configuré pour mesurer le poids de la terre et du stabilisateur de sol (22) sur le premier transporteur.

15. Système de stabilisation du sol selon l'une quelconque des revendications précédentes, comprenant en outre une unité de régulation configurée pour ajuster un débit d'alimentation du stabilisateur de sol (22).

16. Procédé de stabilisation du sol, comprenant les étapes consistant à :
- recevoir et contenir la terre excavée dans au moins un conteneur (1),
- déplacer la terre vers une extrémité de sortie (20) du conteneur (1) au moyen d'une unité de transport (12),
- alimenter de manière contrôlable un stabilisateur de sol (22) à partir d'une unité d'alimentation vers la terre sur l'unité de transport (12), au niveau de l'extrémité de sortie (20) du conteneur (1),
- mélanger la terre et le stabilisateur de sol (22) avec une unité de mélangeur rotatif (2) située dans la direction de transport et après l'unité d'alimentation, **caractérisé en ce qu'**une direction de rotation de l'unité de mélangeur rotatif (2) correspond à une direction de rotation définie par l'unité de transport (12),
**en ce que** la quantité du stabilisateur de sol (22) ajoutée à la terre est inférieure à 1 pour cent en poids par rapport à la quantité de terre, **en ce que** ladite unité de mélangeur rotatif (2) comprend un axe rotatif (6) et une pluralité de palettes (5) situées le long de l'axe rotatif (6) et s'étendant radialement à partir de l'axe rotatif (6), **en ce que** les palettes (5) comprennent une extrémité en forme de L ou en forme de T formée d'un élément rigide en forme de lame ou en forme de pelle venant en prise avec la terre et le stabilisateur de sol (22) sur le transporteur de telle sorte que la terre se sépare tout en se mélangeant avec le stabilisateur de sol (22), et **en ce que** les palettes (5) s'étendent à partir de l'axe rotatif (6) avec diverses orientations de telle sorte que la terre se sépare et soit mélangée efficacement.
